# NEW EUROPEAN PATENT SPECIFICATION

(11) **EP 1 933 644 B2**
(45) Date of publication and mention of the opposition decision: **17.02.2016**
(45) Mention of the grant of the patent: 07.04.2010
(21) Application number: 06791959.7
(22) Date of filing: 11.09.2006
(51) Int. Cl.: A23L 33/00, B65D 1/02

(54) **NUTRITIONAL CONCENTRATE FOR INFANTS**
NÄHRKONZENTRAT FÜR KLEINKINDER
CONCENTRÉ NUTRITIONNEL POUR NOURRISSONS

(30) Priority: 09.09.2005 EP 05077060
(43) Date of publication of application: 25.06.2008
(73) Proprietor: Van Haren, Han Pierre, 5961 E J HORST (NL)
(72) Inventor: Van Haren, Han Pierre, 5961 E J HORST (NL)
(74) Representative: Algemeen Octrooi- en Merkenbureau B.V.
(86) International application number: PCT/EP2006/008810
(87) International publication number: WO 2007/028644

(56) References cited:
- WO-A-2005/096845
- WO-A1-99/30669
- WO-A1-02/089591
- WO-A1-2006/029298
- WO-A1-2006/077259
- WO-A2-2006/099013
- US-A- 2 663 642
- US-A- 2 959 485
- US-A- 3 052 555
- US-A- 4 146 652
- US-A- 5 000 314
- US-A- 5 013 569
- US-A- 5 683 984
- US-B1- 6 423 354
- DATABASE WPI Section Ch, Week 198020 Derwent Publications Ltd., London, GB; Class D13, AN 1980-35502C XP002361521 & JP 55 047126 A (SNOW BRAND MILK PROD CO LTD) 3 April 1980 (1980-04-03)

## Description

The present invention relates to a method for the preparation of an infant formula concentrate to be used in a package containing a nutritional concentrate for infants comprising the for an infant food essential component. Such a nutritional concentrate is filled at high concentration into portion packs, e.g. a single dose. It relates further to a package to be used for the infant formula concentrate, as well to methods to prepare from these portion packs with concentrates ready to serve and ready to feed portions of infant formulae.

Main criteria to be achieved by a good formula for Infants are to offer:
- at low costs
- absolutely safe products
- with the highest possible nutritional value
- which can be handled safely
- at the optimal level of convenience.

Reviewing the actual developments in the field of infant formulae, one has to conclude, that most of the recent features are focused on claims of improved nutritional value by adding trace components similar to those detected in mothers milk. While nutritional effects of these new additives are often difficult to prove, their share on increase of prices for the user of those formulae might be quite significant. At the same time progress in regard to any of the other above mentioned criteria is quite rare, even in regard to further improvement of the quality of main nutritional components like lipids, proteins and carbohydrates.

Today the majority of infant formulae are manufactured as powder. If the criteria mentioned above are taken in account, powder has to be judged at least as not optimal if not even as critical.

Constantly ongoing improvements and precautions implied during manufacturing, preparation and feeding of powder based infant formulae could up to date not avoid cases of infants suffering from illness caused by bacteriologically infected products. In many cases the infection is accompanied only with temporary diarrhea and gripes, but depending on the germs involved and the health status of the infant, also heavy infections up to cases of death were assessed.

Without any doubt the major part of these infections remains unrevealed. Sources of bacteriological contaminations are plenty and may occur during powder production and during preparation and handling of the nursing bottle:
- small concentrations of germs have survived heat treatment applied during production.
- Recontamination of the powder may occur between drying and final packaging.
- Water used for reconstitution was not sterile.
- Remainders of powder in an open package were spoiled during former handling.
- Not finished bottles are fed after being stored too long under bad conditions.

In practice preparation of the infant bottle from a powder requires so much attention, that any stress like for example trying to calm down the crying baby at the same time may easily be reason for wrong handling.

The risk profile of E. Sakazakii in powder for infant formulas pointed out that this germ on one hand is rather heat resistant and on the other hand extremely dangerous causing sepsis and meningitis (source: report from the Codex Alimentarius Commission (January 2004)). Therefore, there is much research needed, but at the same time producers of infant formulae are urged to offer when ever possible sterilized products. Based on a similar safety risk assessment in many hospitals exclusively sterilized liquid products are fed to the infants.

EP 1 314 361 relates to a shelf stable nutritional composition containing intact whey protein, which composition provides a complete calorically dense formula suitable for use as a ready to use liquid composition that does not require reconstitution and admixing.

US 5,683,984 relates to a process for preparing an enteral composition suitable for tube feeding wherein minerals are added together with a protein material, glucides and lipids in a medium for preparing an enteral composition suitable for tube feeding and then the composition is sterilized, wherein milk is micro-filtered for obtaining micellar casein, i.e. milk is micro-filtered to obtain a retentate and the retentate is diafiltered and concentrated to a dry matter content of form 18 % to 20 % for obtaining the micellar casein.

US 4,146,652 relates to intermediate-moisture foods and other products which remain ready to use at freezer temperatures. After removal from the freezer the foods may be held at room temperature or refrigerator temperature for a considerable period of time without spoilage. These foods are characterized by a high sugar content, at least equal in weight to the amount of water present in order to provide microbiological stability.

US 2,959,485 relates to a pasteurized, concentrated sweetened cream product containing from 20-60 % milk fat and a nonfat milk solids to-fat ratio of about 0.05 to approximately 0.5 and in which the sucrose-in-water percentage is about 60 tot 65 and is sufficiently high to produce an osmotic pressure of such magnitude that microorganisms will not grow, and in which the viscosity is at least of such magnitude as to cause the insoluble solids to remain uniformly dispersed.

JP 55-047126 relates to a method for dissolving a powder such as powder milk by mixing the powder homogeneously with water and dissolve the powder into a homogeneous paste to have a water content of 30 to 50 %.

US 6,423,354 relates to a method of manufacturing a low pH liquid food composition, which has high antimicrobial activity and extended shelf life utilizing casein or milk protein isolates comprised mostly of casein, as the protein source for the food composition.

The often applied alternative method to increase product safety by cooking the prepared formula for some minutes, should be strictly excluded to avoid serious losses of nutritional components caused by such a treatment. Beside these safety issues, the other short comings of the powdered infant formula in regard to nutritional, handling and convenience aspects are compiled in Table 1.

Many of the issues can be excluded by providing formulae as sterilised liquid, specially when filled as a single serving portion, which will be used up without leftover in one go. These liquids can be produced post sterilized after filling or can be filled under aseptic conditions at the highest microbiological standard of safety. As packaging materials glass and a range of different metals and polymers or combinations of them are applied.

Critical regarding producing liquid formula are final product costs and environmental aspects. Especially if the most favourable single portion package will be chosen, both costs for packaging material and transport costs of the finished products will increase dramatically. Comparing powder and liquid formula both transport weight and transport volume will increase by a factor of at least ten. (See Table).

Concentrates are produced at total solids of about 25 % ready to be diluted at a ratio of 1 to 1 with water. Due to the big volume a single portion represents at this concentration, packages of single servings are not an effective solution in regard to reduction of costs needed for packaging material and transport of finished goods.

**Table: Main issues of the production of infant formulae based on powder and liquid formulations**

| **A) Powder** | |
|---|---|
| safety | no microbiological sterility of the powder infection of powder and prepared formula during handling |
| | |
| nutrition | reduced value of nutritional components due to drying reduced nutritional value due to overheating during preparation quality losses of product remaining in the opened package losses of vitamins etc when stored in badly gassed packages problems of measuring a constant dosing of powder |
| | |
| handling | spilling of powder during preparation bad dissolution of the powder (wetability, hydratisation) absorbs a lot of attention |
| | |
| convenience | only restricted outdoor usage possible |

| **B) Liquid (i.e. not concentrated)** | |
|---|---|
| safety | infection of remainders if not portion packed |
| | |
| nutrition | fast quality losses of liquids exposed in the opened package to air |
| | |
| handling | spilling of product unless not portion packed big volume and heavy weight to be carried home |
| | |
| environment | enormous consumption of packaging material specially with single serving tremendously increased transport regarding to both volume and weight |
| | |
| costs | increased material costs increased transport costs due to large amounts of water |

The objective of the present invention is to overcome all issues summarized in the above Table, which are accounted from manufacturing infant formulae according to as powder or a liquid.

The present invention is based on the unexpected finding that highly concentrated infant formulas are shelf stable when packaged sterilized.

The method for the preparation of an infant formula concentrate to be used in a package containing a nutritional concentrate for infants comprising the for an infant food essential components according to the present invention is characterized by the characterizing portion of claim 1.

The nutritional concentrate according to the present invention is characterized by a total dry solid content ranging between 45 and 60 % by weight, on basis of the total weight of said concentrate.

Only in a nutritional concentrate with high total solid content all benefits of the ready-to-feed liquid product and the powder are joined together in one concept.

On one hand the concentrate is as safe as the liquid product and on the other hand both volume and production costs stay in a range very close to that of the dried product.

The dry solid content lies between 45-60% by weight, on basis of the total weight of said concentrate.

Main benefits of the concentrate are mentioned below.

By supplying the capsule with the nutritional concentrate together with the apparatus for its preparation, the manufacturer of infant formulas is for the first time able to offer a feeding system which provides the optimal nutritional value on a kind of island free of germs even under circumstances, which might be judged as microbiologically not save.

For each type of infant formula an optimal concentration of the concentrate can be envisioned in the given range between 45 and 60 % of total solids depending only on the selected components of the different formulations.

In the range between 45 and 60 % of total solids the volume of the concentrate is due to its high density smaller than the same formula produced as a powder. The volume of concentrate with 60 % of total solids was for example found already to be 25 % smaller than the resp. powder variant.

The present invention further relates to a package to be used for the nutritional concentrate as disclosed in the appended subclaims. As first steps to produce shelf stable concentrates of nutritional formulae the different components are dissolved in water and mixed together. After fat addition normally a homogenisation is performed in order to achieve a stable emulsion.

The technique to stabilize the concentrates was studied deeply during the development of the invention and was tested over the whole range of infant formulas. Specially higher concentrates with high whey protein contents show excellent stability, while starch containing products had to be produced at slightly lower range of concentration to be perfectly stable. Further on the stability of the concentrate could be improved by adapting homogenisation conditions to the nature of the casein, whey protein or protein hydrolysate content of the product. After formulation the intermediate concentrates are standardised to the final dry matter content by removal (e.g. evaporation) or addition of water.

The manufacture of infant formulae involves the blending of water-soluble proteins, carbohydrates, vitamins and minerals with vegetable oils to achieve a homogeneous solution, followed by sufficient heat treatment or dehydration to provide bacteriological safety. The composition for an infant formula is as follows:

| Nutrient | Units 100 kcal⁻¹ | min | max |
|---|---|---|---|
| protein | g | 1 | 5 |
| fat | g | 3 | 7 |
| vitamin A | IU | 200 | 800 |
| vitamin D | IU | 30 | 150 |
| vitamin E | IU | 0.6 | |
| vitamin K | µg | 3 | |
| vitamin B1 | µg | 30 | |
| sodium | mg | 20 | 60 |
| potassium | mg | 60 | 200 |
| chloride | mg | 50 | 175 |
| carbohydrate | g | 5 | 20 |

Finally the concentrates are first filled and then sterilized or are alternatively first UHT-sterilised and subsequently aseptically filled. Both variants result in a sterile product if heating conditions are chosen well. The concentrates are shelf stable for at least six months.

The concentrate can easily be diluted with the desired amount of sterile water to a ready to feed infant formula.

This finding was found to be valid for all kind of infant formulas regardless of the composition of proteins, fat and carbohydrates.

On basis of this the method for the preparation of an infant formula concentrate according to claim 1, comprises the following steps:
i) prepaying in water of a mixture of nutritional components, except fat components.
ii) adding fat components to the mixture according to step i),
iii) adjusting the pH value of the mixture according to step ii), if necessary,
iv) adjusting the amount of dry solid contents of the mixture according to step iii), and
v) supplying the mixture obtained according to step iv) in separate single doses, wherein the mixture obtained after step iv) is sterilized, and after said sterilization treatment step v) is carried out, or the single doses obtained after step v) are sterilized, wherein the dry solid content of the concentrate lies between 45-60 % by weight, on basis of the total weight of said concentrate, wherein the amount of said infant formula concentrate is suitable to be used as single dose, in which said infant formula concentrate, if necessary, is diluted with a predetermined amount of diluent.

The experimental data as on file now clearly show how the concentrate of an infant formula can be composed from well selected fractions, which are heated and transferred into a sterile tank separately one after the other. This is a way to avoid heating jointly those ingredients, which would loose major part of the natural nutritional value due to chemical reactions (i.e. Maillard reaction) taking place between those components at increased temperature as being found during drying of the powder.

According to another embodiment the present method comprises the following steps:
x) preparing a first mixture of nutritional carbohydrate free protein components in water,
xi) adding fat components to the mixture according to step x),
xii) sterilizing the mixture obtained after step xi),
xiii) transferring the mixture thus sterilized to a tank,
xiv) separately preparing a second mixture of nutritional components containing carbohydrate,
xv) sterilizing the mixture according to step xiv),
xvi) transferring the mixture thus sterilized according to step xv) to a tank,
xvii) adding one or more sensitive components to the tank,
xviii) adjusting the dry solid content of the mixture obtained after step xvii), and
xix) supplying the mixture obtained after step xviii) to individual single doses, wherein the dry solid content of the concentrate lies between 45-60 % by weight, on basis of the total weight of said concentrate, wherein the amount of said infant formula concentrate is suitable to be used as single dose, in which said infant formula concentrate, if necessary, is diluted with a predetermined amount of diluent.

Two kinds of single portion packs have been developed by the present invention, one for manual use and the second one to prepare a portion of feed for infants by means of especially designed device.

The one for manual use has the shape of a little pot sealed with a foil on top. To prepare the infant feed the prescribed amount of sterilised water at about 40 °C is filled into an infant bottle. Then the foil on top of the package is manually stripped off and the content of the package is poured into the bottle. The bottle is closed and after little shaking or stirring in order to mix the concentrate well into the water, the bottle is ready for feeding.

For the second type of usage the package is designed as a kind of capsule from which the concentrate is transferred into a baby bottle where a ready to feed infant milk is prepared with the help of a specially developed apparatus.

Both bottom and top of the capsule are closed with foils or similar devices of any adequate material, which are perforated or cut open in the apparatus. When the head of the apparatus with the hollow thorn is pressed downwards, the foil at the bottom is perforated and cut open to transfer the concentrate to the nursing bottle. Then by pressing the hollow thorn downwards a hole is punched into the foil at the top end and the concentrate is rinsed completely into the nursing bottle with the sterilised water.

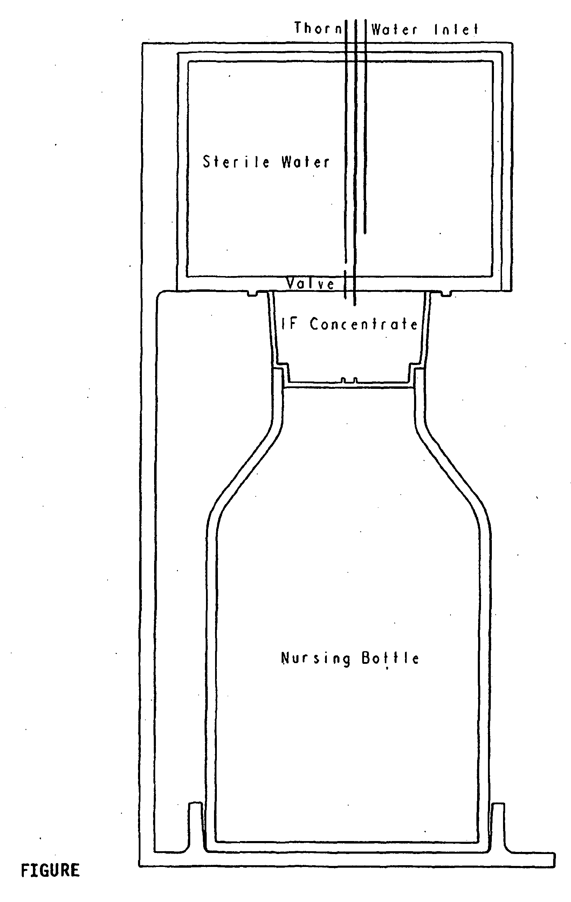

A suitable apparatus has been schematically shown in the appended Figure.

The apparatus can be used in two different ways, i.e.
1. Perforate the top and the bottom of the capsule,
2. Percolate in one step the concentrate at high pressure with the pre-chosen volume of sterilised water completely into the baby bottle, or
   first release the concentrate to the bottle and then rinse with the pre-chosen volume of sterilised water all remainders of concentrate completely into the baby bottle.

Special attention is paid to fulfill the increased microbiological safety level, which is mandatory for the preparation of infant formulas.

To achieve this level, the water has to be sterilised by cooking or by means of sterile filtration. The hollow thorn, which forms the perforation device for the top of the capsule, has to be sterilised before each preparation. One possibility is to sterilize the thorn in the water reservoir, if the water is sterilised by heating.

Additionally, sterility of each capsule is monitored in the apparatus as a first step before starting the preparation by detecting any enlargement of the height of the capsule caused by gas and pressure development, which is indicating any spoilage due to microbiological growth in the concentrate in the capsule.

The apparatus can be designed at every level of automation from manually to fully automated depending on the circumstances, in which the infant feed is prepared.

For the special case of nutrition for premature infants or very sick children, cohorts which are extremely sensitive to bacteriological contaminations, a fully automated, most probably multi stage apparatus for the preparation of a number of bottles in one go, would be the best solution. All preparation steps as there are:
- the sterilisation of the empty bottle by steam,
- the sterilisation of the water for preparation in side the apparatus,
- the percolation of the concentrate with sterile water,
- the inserting of the teat aperture, and
- and the regulation of the feeding temperature

All of the above steps are executed without any person having to touch the product at any stage.

But also for normal usage at home the benefits of a more or less automated device are obviously regarding safety, nutritional value, and convenience.

Improvements achieved by the invention when applying manual application (A) or *application* of *the apparatus (B)* are as follows:.

### Safety

- Absolute sterility of the formula delivered in the package (A).
- Sterility in the baby bottle (A).
- No measuring of product and no leftovers in the package (A).
- No possibility of contamination of leftovers in the package (A).
- The product is not touched during any phase of the preparation (B).
- Usage of sterilized water which is transferred directly with the concentrate into the baby bottle (B).
- Multi-stage apparatus for clinical applications, especially in critical situations like feeding premature babies (B).

### Nutrition

- No degradation of sensitive components for example proteins during drying (A).
- No nutritional degradation due to sterilization of the prepared infant bottle (A).
- No losses of nutritional value of the leftovers in the open package (A).
- The possibility is given to always serve a freshly prepared infant bottle (A).
- No possibility of losses of nutritional value due to improper gassing of powder (A).
- More accurate dosing compared to the powder (A).

### Handling

- No need of measuring portions of powder or liquid (A).
- No problem of spilling product during preparation(A).
- Preparation with sterilized water is instantly(A).
- No problems of solubility caused by lumps during reconstitution (B).
- Due to the automated operation of preparation more attention can be paid to the infant (B).
- All features like volume and temperature are controlled automatically (B).

### Convenience

- The volume of product to be carried home is not increased in comparison to the powder.
- Easy application out of home.
- Good miscibility.

### Examples

### Example 1: Infant formula concentrate having a ratio of casein to whey protein of 3 to 2.

(1) All water soluble components like demineralized whey powder, skimmed milk powder, lactose, malto-dextrin and minerals are dissolved at 55 °C in 320 kg of water and are hydrated at constant temperature for at least one hour. The ratio of casein to whey protein is chosen at 60 to 40. The protein content of the mix is 60 kg. The final contents of total solids of the mix after all additions is about 45 %.
(2) 125 kg of fat mix containing milk fat, corn oil, palm oilein, soybean oil and lecithin is heated to 55 °C and then added to the solution prepared under (1). In order to achieve a stable emulsion the whole mixture is homogenized in two stages at 250 and 50 bar.
(3) Vitamins and trace elements are introduced, the pH-value is adjusted to 6.8 and the total solid content of the infant formula concentrate is standardized by the addition of water to 48 %.
(4) The concentrate is then UHT-sterilized by preheating to 80 °C and high heating at 148 °C for 5 sec. The sterilized concentrate is cooled to 8 °C and pumped into a double-walled sterile tank.
(5) The concentrate is pumped from the sterile tank into an aseptic filling machine and filled into sterilized capsules, each of them filled with a portion of concentrate to prepare one serving in an infant bottle. The capsules are hermetically sealed in a sterile environment.
(6) The portion packed concentrate has a composition of 56 g of protein per kg, 275 g of carbohydrates per kg and 125 g of fat per kg.
(7) The concentrate is stable for at least 6 months at ambient temperature and can be transformed by adding the right amount of sterilized warm water into a portion of infant formula ready to feed.

Alternative process steps after (3) standardisation are:
(4*) The concentrate is filled into capsules, each of them filled with a portion of concentrate to prepare one serving in an infant bottle. The capsules are hermetically sealed and sterilised by heating.
(5*) The portion packed concentrate has a composition of 56 g of protein per kg, 275 g of carbohydrates per kg and 125 g of fat per kg.
(6*) The concentrate is stable for at least 6 months at ambient temperature and can be transformed by adding the right amount of sterilized warm water into a portion of infant formula ready to feed.

### Example 2: Infant formula concentrate based on enzymatically hydrolyzed whey protein.

(1) Demineralized whey powder is dissolved and hydrated in water at a protein content of about 5 %. This solution is heated to 52 °C and a protolytically active enzyme is added. Under stirring the hydrolysis reaction is completed after 2 hours. During the whole reaction time the pH-value of the solution is maintained at 7.8 by the addition of Na- and K-hydroxide. When the hydrolysis is completed, the enzyme is inactivated by a heating step above 80 °C.
(2) Remaining amounts of lactose, malto-dextrin and minerals are added into the solution of protein hydrolysate. The total solid content of this mix is 42 %.
(3) The solution is controlled at a temperature of 60 °C and the fat mix, which is pre-heated also to 60 °C, is added. To produce a stable emulsion this blend is homogenized in two stages at 200 and 40 bar.
(4) Trace elements and vitamins are added, the pH-value is adjusted at 6.8 and the content of total solids of the finished infant formula concentrate is diluted with water to 56%.
(5) The concentrate is UHT-sterilized by preheating to 80 °C and high heating at 148 °C for 5 sec. The sterilized concentrate is cooled to 10 °C and pumped into a double-walled sterile tank.
(6) The concentrate is pumped from the sterile tank into an aseptic filling machine and filled into sterilized capsules, each of them filled with a portion of concentrate to prepare one serving in an infant bottle. The capsules are hermetically sealed in a sterile environment.
(7) The portion packed concentrate has a composition of 65 g of hydrolyzed protein per kg, 314 g of carbohydrates per kg and 146 g of fat per kg.
(8) The concentrate is stable for at least 6 months at ambient temperature and can be transformed by adding the right amount of sterilized warm water into a portion of infant formula ready to feed.
Alternative processing can be performed as mentioned in Example 1.

### Example 3: Infant formula concentrate produced by separate aseptic addition of the components.

(1) A mixture having the intended ratio of K-caseinate and whey protein isolate of 40 to 60 is dissolved in 280 kg of water at a total protein content of 58 kg. 130 kg of a fat mix (corn oil, palm oilein, soybean oil) is added to produce an oil in water (O/W) emulsion.
(2) This mixture is homogenized at 65 °C in a two stage homogenizer at 200 and 50 bar. Trace elements and vitamins are introduced into this mixture. The emulsion is then UHT-sterilized by preheating to 80 °C and high heating at 148 °C for 5 sec. The sterilized concentrate is cooled to 8 °C and pumped into a double-walled sterile tank with a stirrer.
(3) 280 kg of a carbohydrate blend made of 2 parts of lactose and one part of malto-dextrin (DE 10-14) is dissolved together with minerals in 200 kg of water according to formula requirements.
This solution is than heat sterilised and added to the sterile tank as described under (2).
(4) All other nutrients like lipids containing highly unsaturated fatty acids, which have to be heated in the absents of oxygen or of other components of the infant formula are sterilized in 10 kg of water and are added to the sterile tank as mentioned under (2).
(5) The final total solids of the finished concentrate is standardised by addition of sterilised water.
(6) The concentrate is pumped from the sterile tank into an aseptic filling machine and filled into capsules, each of them filled with a portion of concentrate for one infant bottle. The capsules are hermetically sealed in a sterile environment.
(7) The resulting concentrate has the following composition:
   - protein 58 g/kg; carbohydrates: 280g/kg; fat: 130g/kg.

The product has a total solid content of 50 % and is stable for at least 6 months at ambient temperature still having a clean taste.

It can be diluted by adding sterilized warm water to a homogeneously mixed portion of infant formula.

### Example 4: Preparation of an infant formula ready to feed from a concentrate.

Tests of the solubility comparing the nutritional concentrate of a starter formula for the first months at total solids of 50 % with the same amount of dry matter as powder.
Both products were prepared from a portion pack with an espresso-type machine.

| | **Concentrate** | | | **Powder** | |
|---|---|---|---|---|---|
| **Product** | | | | | |
| Dry matter in capsule | 19,3 | | | 19,3 | g |
| Capsule volume | 35 | | | 43 | ml |
| Density of product | 1,161 | | | 0.480 | g/ml |
| Product in capsule | 38,6 | | | 19,6 | g |
| Concentration | 50 | | | 98,5 | w% |
| | | | | | |
| **Apparatus** | | | | | |
| Pressure | | 6*10^5 | Pa | | |
| Temperature of water | | 50 °C | | | |
| Percolation time | | 35 | sec | | |
| Amount of water added | 111,4 | | | 130,4 | ml |
| | | | | | |
| **Result of percolation** | | | | | |
| Quantity percolated | 100 | | | 92 | % |
| Not dissolved powder | 0 | | | 18 | % |
| State of dissolution in the infant bottle | perfect | | | not acceptable | |

## Claims

1. A method for the preparation of an infant formula concentrate to be used in a package containing a nutritional concentrate for infants comprising the for an infant food essential nutritional components wherein the method comprises the following steps:
i) preparing in water of a mixture of nutritional components, except fat components,
ii) adding fat components to the mixture according to step i),
iii) adjusting the pH value of the mixture according to step ii), if necessary,
iv) adjusting the amount of dry solid contents of the mixture according to step iii), and
v) supplying the mixture obtained according to step iv) in separate single doses, wherein the mixture obtained after step iv) is sterilized, and after said sterilization treatment step v) is carried out, or the single doses obtained after step v) are sterilized, wherein the dry solid content of the concentrate lies between 45-60% by weight, on basis of the total weight of said concentrate, wherein the amount of said infant formula concentrate is suitable to be used as single dose, in which said infant formula concentrate, if necessary, is diluted with a predetermined amount of diluent.

2. A method according to claim 1, **characterized in that**, the diluent comprises water.

3. A method for the preparation of an infant formula concentrate to be used in a package containing a nutritional concentrate for infants comprising the for an infant food essential nutritional components, wherein the method comprises the following steps:
x) preparing a first mixture of nutritional carbohydrate free protein components in water,
xi) adding fat components to the mixture according to step x),
xii) sterilizing the mixture obtained after step xi),
xiii) transferring the mixture thus sterilized to a tank,
xiv) separately preparing a second mixture of nutritional components containing carbohydrate,
xv) sterilizing the mixture according to step xiv),
xvi) transferring the mixture thus sterilized according to step xv) to the tank,
xvii) adding one or more sensitive components to the tank,
xviii) adjusting the dry solid content of the mixture obtained after step xvii), and
xix) supplying the mixture obtained after step xviii) to Individual single doses, wherein the dry solid content of the concentrate lies between 45-60% by weight, on basis of the total weight of said concentrate, wherein the amount of said infant formula concentrate is suitable to be used as single dose, in which said infant formula concentrate, if necessary, is diluted with a predetermined amount of diluent.

4. A method according to claim 3, **characterized in that**, the diluent comprises water.

5. A method for the preparation of a liquid nutritional composition for infants by diluting an infant formula concentrate with a certain amount of diluent, **characterized in that**, the contents of the package obtained according to any one of the method claims 1-4 is transferred in a desired amount to a container, diluting the contents of the container with a certain amount of diluent, and shaking and stirring the contents of the container thus obtained can be carried out.

6. A method according to claim 5, **characterized in that**, the package is placed on the entrance of the container, the packaged is perforated, wherein said package is perforated in such a way that the contents of the package is transferred to the container, wherein the content of the container is further adjusted with a certain amount of diluent, after which the container can be stirred or shaken.

## Patentansprüche

1. Verfahren zur Zubereitung eines Säuglingsnahrungskonzentrats zur Verwendung in einer Packung, die ein Nährkonzentrat für Säuglinge mit den für eine Säuglingsnahrung wesentlichen Nährstoffbestandteilen enthält, wobei das Verfahren die folgenden Schritte umfasst:
i) eine Mischung aus Nährstoffbestandteilen, ausgenommen Fettbestandteile, wird in Wasser zubereitet,
ii) der Mischung gemäß Schritt i) werden Fettbestandteile zugesetzt,
iii) gegebenenfalls wird der pH-Wert der Mischung gemäß Schritt ii) eingestellt,
iv) die Menge an Trockensubstanzgehalt der Mischung gemäß Schritt iii) wird eingestellt, und
v) die gemäß Schritt iv) erhaltene Mischung wird in getrennten Einzeldosen bereitgestellt, wobei die nach Schritt iv) erhaltene Mischung sterilisiert und nach der Sterilisierungsbehandlung Schritt v) durchgeführt wird oder die nach Schritt v) erhaltenen Einzeldosen sterilisiert werden, wobei der Trockensubstanzgehalt des Konzentrats, bezogen auf das Gesamtgewicht des Konzentrats, zwischen 45 und 60 Gew.-% liegt, wobei die Menge des Säuglingsnahrungskonzentrats zur Verwendung als Einzeldosis geeignet ist, bei der das Säuglingsnahrungskonzentrat gegebenenfalls mit einer vorbestimmten Menge Verdünnungsmittel verdünnt wird.

2. Verfahren nach Ansprüch 1, **dadurch gekennzeichnet, dass** das Verdünnungsmittel Wasser umfasst.

3. Verfahren zur Zubereitung eines Säuglingsnahrungskonzentrats zur Verwendung in einer Packung, die ein Nährkonzentrat für Säuglinge mit den für eine Säuglingsnahrung wesentlichen Nährstoffbestandteilen enthält, wobei das Verfahren die folgenden Schritte umfasst:
x) eine erste Mischung aus kohlenhydratfreien Eiweißnährstoffbestandteilen wird in Wasser zubereitet,
xi) der Mischung gemäß Schritt x) werden Fettbestandteile zugesetzt,
xii) die nach Schritt xi) erhaltene Mischung wird sterilisiert,
xiii) die so sterilisierte Mischung wird in einen Behälter gegeben,
xiv) eine zweite Mischung aus Nährstoffbestandteilen, die Kohlenhydrate enthalten, wird getrennt zubereitet,
xv) die Mischung gemäß Schritt xiv) wird sterilisiert,
xvi) die gemäß Schritt xv) so sterilisierte Mischung wird in den Behälter gegeben,
xvii) ein oder mehrere empfindliche Bestandteile werden in den Behälter zugegeben,
xviii) der Trockensubstanzgehalt der nach Schritt xvii) erhaltenen Mischung wird eingestellt, und
xix) die nach Schritt xviii) erhaltene Mischung wird individuellen Einzeldosen zugeführt, wobei
der Trockensubstanzgehalt des Konzentrats, bezogen auf das Gesamtgewicht des Konzentrats, zwischen 45 und 60 Gew.-% liegt, wobei die Menge des Säuglingsnahrungskonzentrats zur Verwendung als Einzeldosis geeignet ist, bei der das Säuglingsnahrungskonzentrat gegebenenfalls mit einer vorbestimmten Menge Verdünnungsmittel verdünnt wird.

4. Verfahren nach Ansprüch 3, **dadurch gekennzeichnet, dass** das Verdünnungsmittel Wasser umfasst.

5. Verfahren zur Zubereitung einer Flüssignahrungszusammensetzung für Säuglinge durch Verdünnen eines Säuglingsnahrungskonzentrats mit einer bestimmten Menge Verdünnungsmittel, **dadurch gekennzeichnet, dass** der nach einem der Verfahrensansprüche 1 bis 4 erhaltene Inhalt der Packung in einer gewünschten Menge in ein Gefäß gegeben wird, der Inhalt des Gefäßes mit einer bestimmten Menge Verdünnungsmittel verdünnt wird und der so erhaltene Inhalt des Gefäßes geschüttelt und umgerührt werden kann.

6. Verfahren nach Anspruch 5, **dadurch gekennzeichnet, dass** die Packung auf die Einlassöffnung des Gefäßes gesetzt wird, die Packung durchstochen wird, wobei die Packung derart durchstochen wird, dass der Inhalt der Packung in das Gefäß gelangt, wobei der Inhalt des Gefäßes ferner mit einer bestimmten Menge Verdünnungsmittel eingestellt wird, woraufhin das Gefäß umgerührt oder geschüttelt werden kann.

## Revendications

1. Procédé pour la préparation d'un concentré de préparation pour nourrissons destiné à être utilisé dans un conditionnement contenant un concentré nutritionnel pour les nourrissons comprenant les composants nutritionnels essentiels à un aliment pour nourrissons, dans lequel le procédé comprend les étapes suivantes :
i) la préparation dans l'eau d'un mélange de composants nutritionnels, à l'exception des matières grasses ;
ii) l'ajout des matières grasses au mélange selon l'étape i) ;
iii) l'ajustement de la valeur du pH du mélange selon l'étape ii), si nécessaire ;
iv) l'ajustement de la teneur en matière solide sèche totale du mélange selon l'étape iii) ; et
v) le remplissage du mélange obtenu selon l'étape iv) dans des doses unitaires distinctes, dans lequel le mélange obtenu après l'étape iv) est stérilisé, et ensuite ladite stérilisation de l'étape v) est réalisée, ou les doses unitaires obtenues après l'étape v) sont stérilisées, dans lequel la teneur en matière solide sèche totale du concentré se situe entre 45 % et 60 % en poids, par rapport au poids total dudit concentré, dans lequel la quantité dudit concentré de préparation pour nourrissons est adaptée pour être utilisée en tant que dose unitaire, dans lequel ledit concentré de préparation pour nourrissons, si nécessaire, est dilué dans une quantité prédéterminée d'un agent diluant.

2. Procédé selon la revendication 1, **caractérisé en ce que** l'agent diluant comprend de l'eau.

3. Procédé pour la préparation d'un concentré de préparation pour nourrissons destiné à être utilisé dans un conditionnement contenant un concentré nutritionnel pour les nourrissons comprenant les composants nutritionnels essentiels à un aliment pour nourrissons, dans lequel le procédé comprend les étapes suivantes :
x) la préparation d'un premier mélange de composants protéiques nutritionnels exempts de glucides dans de l'eau,
xi) l'ajout des matières grasses au mélange selon l'étape x),
xii) la stérilisation du mélange obtenu après l'étape xi),
xiii) le transfert du mélange ainsi stérilisé dans un récipient,
xiv) la préparation séparée d'un second mélange de composants nutritionnels contenant des glucides,
xv) la stérilisation du mélange selon l'étape xiv),
xvi) le transfert du mélange ainsi stérilisé selon l'étape xv) dans le récipient,
xvii) l'ajout d'un ou plusieurs composants sensibles dans le récipient,
xviii) l'ajustement de la teneur en matière solide sèche totale du mélange obtenu après l'étape xvii), et
xix) le remplissage du mélange obtenu après l'étape xviii) dans des doses unitaires, dans lequel la teneur en matière solide sèche totale du concentré se situe entre 45 % et 60 % en poids, par rapport au poids total dudit concentré, dans lequel la quantité dudit concentré de préparation pour nourrissons est adaptée pour être utilisée en tant que dose unitaire, dans lequel ledit concentré de préparation pour nourrissons, si nécessaire, est dilué dans une quantité prédéterminée d'un agent diluant.

4. Procédé selon la revendication 3, **caractérisé en ce que** l'agent diluant comprend de l'eau.

5. Procédé pour la préparation d'une composition nutritionnelle liquide pour les nourrissons en diluant un concentré de préparation pour nourrissons dans une certaine quantité d'un agent diluant, **caractérisé en ce que** le contenu du conditionnement obtenu selon l'une quelconque des revendications 1 à 4 du procédé est transféré en une quantité souhaitée dans un récipient, la dilution du contenu du récipient avec une certaine quantité d'un agent diluant, et l'agitation du contenu du récipient ainsi obtenu pouvant être réalisées.

6. Procédé selon la revendication 5, **caractérisé en ce que** le conditionnement est placé à l'entrée du récipient, le conditionnement est percé, dans lequel ledit conditionnement est percé de sorte que le contenu du conditionnement est transféré dans le récipient, dans lequel le contenu du récipient est ensuite ajusté en ajoutant une certaine quantité d'un agent diluant, après quoi le récipient peut être agité.
